# EUROPÄISCHE PATENTSCHRIFT

(11) **EP 4 602 920 B1**
(45) Veröffentlichungstag und Bekanntmachung des Hinweises auf die Patenterteilung: **19.11.2025**
(21) Anmeldenummer: 24157335.1
(22) Anmeldetag: 13.02.2024
(51) Int. Cl.: A21D 2/26, A21D 13/064, A21D 13/32

(54) **TEIGMASSE, VEGANER EIGEBÄCK-ERSATZ, HERSTELLUNGSVERFAHREN FÜR DIE TEIGMASSE UND PRODUKTIONSVERFAHREN FÜR DEN VEGANEN EIGEBÄCK-ERSATZ**
DOUGH MASS, VEGAN EGG PASTRY SUBSTITUTE, MANUFACTURING PROCESS FOR THE DOUGH MASS AND PRODUCTION PROCESS FOR THE VEGAN EGG PASTRY SUBSTITUTE
MASSE DE PÂTE, SUBSTITUT VÉGÉTALIEN DE PÂTISSERIE AUX OEUFS, PROCÉDÉ DE PRÉPARATION DE LA MASSE DE PÂTE ET PROCÉDÉ DE PRODUCTION DU SUBSTITUT VÉGÉTALIEN DE PÂTISSERIE AUX OEUFS

(43) Veröffentlichungstag der Anmeldung: 20.08.2025
(73) Patentinhaber: Griesson - de Beukelaer GmbH & Co. KG, 56751 Polch (DE)
(72) Erfinder: Mahnken, Kai Frederik, 56751 Polch (DE); Hajji, Fuad, 56751 Polch (DE)
(74) Vertreter: Bernsmann, Falk

(56) Entgegenhaltungen:
- EP-A1- 4 104 680
- WO-A1-2019/220431
- CN-A- 108 935 595
- US-A- 4 668 519
- JASMINE LUKUKU: "Spicy Vegan Chocolate Sandwich Cookies - Black Food Bloggers Club by The Blenderist", 5 December 2017 (2017-12-05), XP093181118, Retrieved from the Internet <URL:https://theblenderist.com/vegan-chocolate-sandwich-cookies/>
- VIANA ALINE ET AL: "Chicken Eggs Substitute Using Vegetable Origin - A Review", 11 January 2023 (2023-01-11), New York, XP093022218, ISSN: 1935-5130, Retrieved from the Internet <URL:https://link.springer.com/content/pdf/10.1007/s11947-023-02999-1.pdf?pdf=button> DOI: 10.1007/s11947-023-02999-1
- ANONYMOUS: "Pea Protein", NORTHERN PULSE GROWERS ASSOCIATION, 26 January 2018 (2018-01-26), XP055857427, Retrieved from the Internet <URL:https://northernpulse.com/uploads/resources/658/pea-protein-brochure.pdf> [retrieved on 20211103]
- YAZICI GAMZE NIL ET AL: "A review of egg replacement in cake production: Effects on batter and cake properties", TRENDS IN FOOD SCIENCE & TECHNOLOGY, ELSEVIER SCIENCE PUBLISHERS, GB, vol. 111, 5 March 2021 (2021-03-05), pages 346 - 359, XP086538811, ISSN: 0924-2244, [retrieved on 20210305], DOI: 10.1016/J.TIFS.2021.02.071
- NISHA: "A Guide to Vegan Egg Substitutes in Baking - Rainbow Plant Life", 9 May 2020 (2020-05-09), XP093181111, Retrieved from the Internet <URL:https://rainbowplantlife.com/a-guide-to-vegan-egg-substitutes-in-baking/>

## Beschreibung

### Technisches Gebiet

Die Erfindung betrifft eine Teigmasse für die Produktion eines veganen Eigebäck-Ersatzes als Dauerbackware, wobei die Teigmasse folgende Zutaten mit den genannten Massenanteilen an der Teigmasse enthält: von 20 % bis 40 % Mehl, von 15 % bis 35 % Zucker, von 15 % bis 30 % Wasser, von 5 % bis 10 % Pflanzenfett und von 1 % bis 5 % einer aus Erbsen und/oder Ackerbohnen gewonnenen pflanzlichen Proteinzutat, wobei die pflanzliche Proteinzutat einen Protein-Massenanteil an einer Trockenmasse der pflanzlichen Proteinzutat von mindestens 50 % hat.

Die Erfindung betrifft ferner einen veganen Eigebäck-Ersatz als Dauerbackware mit der gebackenen Teigmasse, ein Herstellungsverfahren zur Herstellung der Teigmasse und ein Produktionsverfahren zur Produktion eines Eigebäck-Ersatzes als Dauerbackware mit der Teigmasse.

### Stand der Technik

Eine Umfrage des veganen Lebensmittelherstellers Veganz im Jahr 2020 hat ergeben, dass sich 3,2 % der deutschen Bevölkerung vegan ernähren (https://veganz.com/blog/veganz-nutrition-study-2020/). Der Markt an veganen Backwaren bietet demnach vielversprechendes Potenzial.

In Deutschland sind für die lebensmittelrechtliche Beurteilung von Eigebäck die Leitsätze für Feine Backwaren zu beachten. Unter dem Begriff "Feine Backwaren" werden Erzeugnisse aus Teigen oder Teigmassen verstanden, die durch Backen, Rösten, Trocknen, Kochextrusion oder anderen technologischen Verfahren hergestellt werden. Dabei unterscheiden sie sich von Brot und Kleingebäck rezepturbedingt, da auf 90 Teile Getreide, Getreideerzeugnisse und/oder Stärke mehr als 10 Teile Fett und/oder Zuckerarten enthalten sind. Eihaltige Teigmassen wie die Biskuitmasse, die Wiener Masse und die Eigebäckmasse fallen unter Teigmassen, die bei der Herstellung aufgeschlagen werden, um eine schaumartige Beschaffenheit zu erhalten.

Gemäß den Leitsätzen für Feine Backwaren besteht ein Eigebäck aus Getreideerzeugnissen, Stärken, Zucker und Vollei oder entsprechenden Volleierzeugnissen. Für die Deklaration als Eigebäck muss der Eigehalt mindestens bei 18 % der Menge an verwendeten Getreideerzeugnissen und/oder Stärken liegen. Im Unterschied dazu muss bei einem Biskuit der Eigehalt mindestens bei 66,7 % der Menge an verwendeten Getreideerzeugnissen und/oder Stärken betragen, und die Teigmasse wird ohne Zugabe von Fett hergestellt. Für eine Wiener Masse gilt ebenfalls die Verwendung der zuvor genannten Rohstoffe und die vorgeschriebene Mindestmenge von 66,7 % Vollei. Allerdings ist hier eine Zugabe von mindestens 6 % Butter oder entsprechender Menge an Milchfetterzeugnissen, Margarine oder praktisch wasserfreier Fette bezogen auf das Gewicht an verwendeten Getreideerzeugnissen und/oder Stärken erforderlich.

Bei der Zubereitung von Feinen Backwaren, die traditionell über einen hohen Eigehalt verfügen (z.B. Biskuit, Eigebäck) dominieren verschiedene Leguminosen in Form von Mehlen oder Proteinisolaten als Ei-Ersatz. Diese finden vermehrt Anwendung aufgrund ihrer schäumenden und emulgierendenden Eigenschaften.

Die Patentschrift AU 2017200379 B2 offenbart eine Zusammensetzung aus Pflanzenmehl, wobei das Pflanzenmehl aus Kichererbsen, Ackerbohnen, Sorghum, Linsen und Limabohnen gewonnen ist, und mindestens einem Gummi. Die Zusammensetzung dient dazu, Ei in einem Gebäck funktional zu ersetzen, wobei das Gebäck ausgewählt ist aus Muffins, Kuchen, Cupcakes, Brownies, Kekse, Biscotti, Pfannkuchen, Waffeln, Pasteten, Torten, Scones, Brezel und Crackern.

Die Veröffentlichung US 2023/172241 A1 beschreibt eine Zusammensetzung mit Zutaten pflanzlichen Ursprungs und chemischen Hefen in Pulverform und deren Verwendung als Ersatz für Eier bei der Zubereitung von Back- und Süßwaren. Die Zutaten der Zusammensetzung sind gemahlener ganzer goldener Leinsamen, Erbsenprotein, Erbsenstärke, Calciumdiphosphat, Monocalciumphosphat und Natriumbicarbonat.

Lin et al. (Development of eggless cakes suitable for lacto-vegetarians using isolated pea proteins. Food Hydrocolloids, 2017, 69, 440-449. https://doi.org/10.1016/i.foodhyd.2017.03.014) untersuchen die Zugabe von Erbsenproteinisolat in Kombination mit Xanthan und einem Emulgator als Mischzutat in eifreiem Kuchen. Das Erbsenisolat wird auf 3,48 % bezogen auf die Gesamtcharge dosiert. Die Ergebnisse zeigen, dass die proteinhaltige Mischzutat als Ei-Ersatz geeignet ist und eine ähnliche Dichte der Rohmasse hervorruft, was somit die Schaumbildungsfähigkeit von Erbsenproteinisolat bestätigt. Allerdings kann das spezifische Gebäckvolumen der Referenz nicht erreicht werden.

Die Ergebnisse von Lin *et al.* beziehen sich nicht auf eine vegane Rezeptur, sondern nur drauf, Hühnereier in Kuchen durch eine proteinhaltige Suspension zu ersetzen. Darüber hinaus unterscheiden sich die Zusammensetzungen von Rührkuchen und Eigebäck deutlich.

In einem Forschungsprojekt des Fraunhofer Instituts (Föste, M. (2019). Proteingele als Eiersatz. IVV Fraunhofer. https://www.ivv.fraunhofer.de/de/lebensmittel/pflanzlicheproteine/pflanzliche-proteine-als-eiersatz.html) werden verschiedene pflanzliche Proteine hinsichtlich ihrer Eignung als Ei-Ersatz in Rührkuchen bewertet. Die Untersuchung zu der Gelbildung ergibt, dass die Gelbildungstemperatur bei den Proteinen des Ackerbohnenkonzentrats und den Proteinen des Hühnereies nahezu identisch ist. Zudem wird bei der Teigmasse bei Ackerbohnenkonzentrat eine geringere Dichte gemessen als bei der Referenz mit Hühnerei. Dies bedeutet, dass das Ackerbohnenkonzentrat bezüglich der Schaumbildungsfähigkeit mit Hühnerei vergleichbar ist.

Mustafa et al. (Aquafaba, wastewater from chickpea canning, functions as an egg replacer in sponge cake. International Journal of Food Science & Technology, 2018, 53(10), 2247-2255. https://doi.org/10.1111/ijfs.13813) untersuchen die Anwendung eines veganen Eischnees auf der Basis von Aquafaba, worunter das Kochwasser von Kichererbsen zu verstehen ist, als Ei-Ersatz in Biskuit. Die Ergebnisse zeigen, dass mittels Aquafaba eine eifreie Rezeptur erfolgreich entwickelt werden konnte, die den physikochemischen Eigenschaften des Biskuits mit Hühnerei nahekommt.

Die Patentanmeldung WO 2019/220431 A1 beschreibt Zusammensetzungen, die unter anderem Protein, Mehl aus Leguminosen und Polysaccharid enthalten, und deren Verwendung als Eiersatz. Das Mehl wird beispielsweise aus Bohnen, Erbsen, Linsen, Erdnüssen oder schwarzen Linsen gewonnen. In einigen Ausführungsformen ist das Protein ein Pflanzenprotein, ein Gemüseprotein, ein Leguminosenprotein, ein Samenprotein, ein Getreideprotein, ein Knollenprotein, ein Wurzelprotein, ein Fruchtprotein, ein Hanfprotein, ein Nussprotein, ein Algenprotein oder ein Seetangprotein. In einigen Ausführungsformen umfasst die Zusammensetzung 1 % bis 20 % (Gew./Gew.) Mungbohnenprotein, Kichererbsenprotein oder Erbsenprotein.

Keine der genannten Veröffentlichungen befasst sich mit der industriellen Herstellung von veganem Eigebäck-Ersatz, insbesondere mit einer Füllung und mit einem Schokoladenüberzug, und den sich daraus ergebenden Anforderungen an die verwendete vegane Teigmasse, insbesondere bezüglich der Verarbeitbarkeit der Teigmasse, der exakten Einhaltung von Produktvorgaben (u.a. Höhe, Breite *etc.*) und der Haltbarkeit des resultierenden Endproduktes als Dauerbackware.

Pflanzliche Proteine sind unter anderem in Form von Mehlen, Konzentraten und Isolaten erhältlich, welche sich in ihrem Proteingehalt wesentlich unterscheiden. Gemäß Definition enthalten Mehle weniger als 50 % Proteingehalt. Konzentrate weisen von 50 % bis 80 % Proteingehalt auf, und Isolate weisen mehr als 80 % Proteingehalt auf.

Proteinmehle entstehen durch die Vermahlung von Pressrückständen, die bei der Ölgewinnung anfallen. Bei Proteinkonzentraten erfolgt zusätzlich eine Fraktionierung, bei der Oligosaccharide und Mineralstoffe entfernt werden. Dafür werden die Proteinmehle in wässrigem Alkohol gewaschen. Die Proteine und Polysaccharide sind in Alkohol unlöslich, während die Oligosaccharide und die Mineralstoffe löslich sind und entfernt werden. Anschließend wird das Konzentrat getrocknet. Für die Gewinnung der Proteinisolate werden die Inhaltsstoffe zunächst wie bei der Herstellung der Konzentrate aufgrund ihrer unterschiedlichen Löslichkeit voneinander getrennt. Als zusätzlicher Schritt erfolgt die Einstellung des jeweiligen isoelektrischen Punktes der Proteine. Dort weisen die Proteine die geringste Löslichkeit auf und fallen aus. Anschließend werden die Proteine über Zentrifugation oder Filtration isoliert.

### Technische Aufgabe

Die Aufgabe der Erfindung ist es, eine Teigmasse für einen veganen Eigebäck-Ersatz, einen veganen Eigebäck-Ersatz mit der gebackenen Teigmasse, ein Herstellungsverfahren für die Teigmasse und ein Produktionsverfahren für einen veganen Eigebäck-Ersatz mit der Teigmasse zu schaffen, wobei das Produktionsverfahren auf industrieller Skala kostengünstig umsetzbar ist, und wobei der Eigebäck-Ersatz die physikochemischen und sensorischen Eigenschaften eines Eigebäcks, insbesondere Geruch, Geschmack und Textur eines Eigebäcks, nachbildet. Des Weiteren soll der vegane Eigebäck-Ersatz die Voraussetzungen für eine Dauerbackware erfüllen, damit er sehr lange haltbar und für den Verzehr langfristig geeignet ist.

### Technische Lösung

Die vorliegende Erfindung stellt eine Teigmasse gemäß Anspruch 1 bereit, die die technische Aufgabe löst. Ebenso wird die Aufgabe durch einen veganen Eigebäck-Ersatz gemäß Anspruch 5, ein Herstellungsverfahren gemäß Anspruch 6 und ein Produktionsverfahren gemäß Anspruch 11 gelöst. Vorteilhafte Ausgestaltungen sind Gegenstand der abhängigen Ansprüche.

Die erfindungsgemäße Teigmasse ist für die Produktion eines veganen Eigebäck-Ersatzes ausgelegt. Somit ist auch die Teigmasse vegan. Die Teigmasse enthält einen Massenanteil an der Teigmasse von 20 % bis 40 %, bevorzugt von 25 % bis 35 %, besonders bevorzugt von 25 % bis 30 %, Mehl, beispielsweise Weizenmehl, insbesondere Weizenmehl vom Typ 700. Das Mehl kann mit Vitaminen und/oder Mineralstoffen versetzt sein. Die Teigmasse enthält einen Massenanteil an der Teigmasse von 15 % bis 35 %, bevorzugt von 20 % bis 30 %, besonders bevorzugt von 25 % bis 30 %, Zucker, beispielsweise Weißzucker. Die Teigmasse enthält einen Massenanteil an der Teigmasse von 10 % bis 30 %, bevorzugt von 15 % bis 25 %, besonders bevorzugt von 20 % bis 25 %, Wasser. Die Teigmasse enthält einen Massenanteil an der Teigmasse von 5 % bis 10 %, bevorzugt von 6 % bis 8 %, besonders bevorzugt von 7 % bis 8 %, Pflanzenfett, beispielsweise Palmfett. Die Teigmasse enthält einen Massenanteil an der Teigmasse von 4 % bis 10 %, bevorzugt von 4 % bis 8 %, besonders bevorzugt von 4 % bis 5 %, Feuchthaltemittel, beispielsweise Sorbit. Die Teigmasse kann Enzyme als technisches Hilfsmittel enthalten.

Die Teigmasse enthält eine pflanzliche Proteinzutat mit einem Massenanteil an der Teigmasse von 1 % bis 5 %, bevorzugt von 1 % bis 3 %, besonders bevorzugt von 1 % bis 2 %. Der genannte Massenanteil der pflanzlichen Proteinzutat ist einerseits hoch genug, um einen üblichen Anteil von Ei an der Teigmasse zu ersetzen und andererseits gering genug, um keine negativen Auswirkungen auf eine industrielle Herstellung oder Verarbeitung der Teigmasse, beispielsweise in Form einer verringerten Produktivität, zu zeigen.

Die pflanzliche Proteinzutat ist vorzugsweise geschmacksneutral und/oder geruchsneutral, sodass ein aus der Teigmasse produzierter Eigebäck-Ersatz nicht nach der pflanzlichen Proteinzutat schmeckt oder riecht.

Die pflanzliche Proteinzutat kann chemisch, enzymatisch und/oder physikalisch modifiziert sein. Die pflanzliche Proteinzutat ist vorzugsweise natürlich und/oder unmodifiziert.

### Vorteilhafte Wirkungen

Die pflanzliche Proteinzutat führt bei den genannten Massenanteilen in Kombination mit den übrigen Zutaten der Teigmasse dazu, dass die Teigmasse ein zu einer eihaltigen Teigmasse ähnliches Schaumbildungsvermögen, eine ähnliche Schaumstabilität und ein ähnliches viskoelastisches Verhalten zeigt, sodass die Teigmasse mit für eihaltige Teigmassen ausgelegten Produktionsverfahren und Produktionsanlagen in industriellem Maßstab verarbeitet werden kann. Ferner kann aus der Teigmasse ein Eigebäck-Ersatz als Dauerbackware gebacken werden, der bezüglich des spezifischen Volumens, der Farbe, der Textur, des Geruchs und des Geschmacks einem Eigebäck nahe kommt.

### Beschreibung der Ausführungsarten

Die pflanzliche Proteinzutat ist aus Erbsen und/oder Ackerbohnen gewonnen. Die pflanzliche Proteinzutat ist beispielsweise Erbsenproteinisolat. Die aus den genannten Pflanzen gewonnene pflanzliche Proteinzutat führt zu einer leichteren maschinellen Verarbeitung der Teigmasse und einem Eigebäck-Ersatz mit einer zu einem Eigebäck ähnlicheren Krumenstruktur als pflanzliche Proteinzutaten aus anderen Pflanzen, beispielsweise aus Leinsamen, aus Karotten oder aus Weizen. Der vegane Eigebäck-Ersatz eignet sich als Vorprodukt zur Herstellung eines schokolierten Gebäcks mit Füllung (z.B. Gelee, Marmelade, Schokoladencreme) als Dauerbackware.

Die pflanzliche Proteinzutat hat vorzugsweise einen Protein-Massenanteil an einer Trockenmasse der pflanzlichen Proteinzutat von mindestens 50 %, bevorzugt von mindestens 75 %, besonders bevorzugt von mindestens 80 %. Ein hoher Protein-Massenanteil führt zu einer besonders starken Wirkung der pflanzlichen Proteinzutat. Die pflanzliche Proteinzutat ist beispielsweise ein Proteinmehl, ein Proteinextrakt oder ein Proteinisolat.

Das Pflanzenfett weist bei 20 °C einen Festfettgehalt von mindestens 10 %, bevorzugt mindestens 15 %, und/oder bei 30 °C einen Festfettgehalt von mindestens 5 %, bevorzugt mindestens 10 %, auf. Ein hoher Festfettgehalt führt vorteilhafterweise zu einem hohen spezifischen Volumen eines aus der Teigmasse gebackenen Eigebäck-Ersatzes.

Die Teigmasse enthält vorzugsweise einen Emulgator mit einem Massenanteil an der Teigmasse von 0,2 % bis 0,8 %, bevorzugt von 0,4 % bis 0,6 %.

Die Teigmasse enthält vorzugsweise Stärke mit einem Massenanteil an der Teigmasse von 1 % bis 5 %, bevorzugt von 2 % bis 4 %.

Die Teigmasse enthält vorzugsweise ein Backtriebmittel mit einem Massenanteil an der Teigmasse von 0,2 % bis 1,2 %, bevorzugt von 0,4 % bis 0,8 %. Das Backtriebmittel umfasst beispielsweise Natriumhydrogencarbonat, Kaliumhydrogencarbonat und/oder Ammoniumhydrogencarbonat.

Die Teigmasse enthält vorzugsweise Speisesalz mit einem Massenanteil an der Teigmasse von 0,01 % bis 0,05 %, bevorzugt 0,03 %.

Der erfindungsgemäße vegane Eigebäck-Ersatz umfasst einen Massenanteil an dem veganen Eigebäck-Ersatz von 25 % bis 40 % gebackene erfindungsgemäße Teigmasse.

Der vegane Eigebäck-Ersatz umfasst einen Massenanteil an dem veganen Eigebäck-Ersatz von 40 % bis 60 % auf der gebackenen Teigmasse aufgebrachte Füllung. Die Füllung kann wasserbasiert, insbesondere ein Gelee, eine Konfitüre oder eine Marmelade, oder fettbasiert, insbesondere eine Kakaocreme, sein. Die Füllung kann ein Fruchtgelee, insbesondere in Form einer Fruchtgelee-Linse, sein.

Der vegane Eigebäck-Ersatz umfasst einen Massenanteil an dem veganen Eigebäck-Ersatz von 15 % bis 25 % auf der Füllung aufgebrachte Schokolade, insbesondere in Form eines Schokoladen-Überzugs. Der Begriff "Schokolade" umfasst im Sinne der Erfindung auch vegane Schokoladenalternativen.

Der vegane Eigebäck-Ersatz entspricht somit dem von der Anmelderin unter dem Namen "Soft Cake" vertriebenen Eigebäck, wobei die eihaltige Teigmasse des "Soft Cakes" durch die erfindungsgemäße Teigmasse ersetzt ist. Ein "Soft Cake" besteht aus 28 % gebackener Eigebäck-Teigmasse, 55 % Furchtgelee und 17 % Schokolade.

Das erfindungsgemäße Herstellungsverfahren zur Herstellung der erfindungsgemäßen Teigmasse umfasst ein Zugeben der Zutaten der Teigmasse in einen Mischbehälter und ein Vermischen der Zutaten in dem Mischbehälter, wobei vor dem Zugeben der pflanzlichen Proteinzutat in den Mischbehälter aus der pflanzlichen Proteinzutat eine wässrige Suspension erstellt wird. Das Zugeben der pflanzlichen Proteinzutat in Form der wässrigen Suspension führt zu einer Hydratisierung der in der pflanzlichen Proteinzutat enthaltenen Proteine und somit zu einer homogenen und schnelleren Vermischung mit den übrigen Zutaten, beispielsweise innerhalb von zwei bis sechs Minuten, insbesondere innerhalb von drei bis fünf Minuten, bevorzugt innerhalb von vier Minuten, und somit zu einem robusten, schnelleren und effizienteren Herstellungsverfahren.

Die wässrige Suspension enthält Wasser mit einem Massenanteil an der wässrigen Suspension von 60 % bis 80 %, bevorzugt von 65 % bis 75 %, besonders bevorzugt von 65 % bis 70 %.

Die wässrige Suspension enthält die pflanzliche Proteinzutat mit einem Massenanteil an der wässrigen Suspension von 10 % bis 20 %, bevorzugt von 12 % bis 18 %, besonders bevorzugt von 13 % bis 15 %.

Die wässrige Suspension enthält bevorzugt einen Massenanteil an der wässrigen Suspension von 10 % bis 20 %, bevorzugt von 12 % bis 19 %, besonders bevorzugt von 14 % bis 18 %, Sirup. Der Sirup unterstützt bei der Verleihung von Farbe, insbesondere Bräunung, auf einer Oberseite eines aus der Teigmasse gebackenen Gebäcks während des Backprozesses.

Das Zugeben des Pflanzenfetts erfolgt vorzugsweise in flüssigem Zustand und vor dem Zugeben der übrigen Zutaten. Üblicherweise wird flüssiges Pflanzenfett als letzte Zutat zugegeben. Es hat sich jedoch überraschend herausgestellt, dass eine homogenere Teigmasse entsteht, wenn das flüssige Pflanzenfett als erstes zugegeben wird.

Das Zugeben der pflanzlichen Proteinzutat erfolgt vorzugsweise nach dem Zugeben der übrigen Zutaten. Auch hierdurch wird die Homogenität der Teigmasse verbessert.

Das Vermischen umfasst vorzugsweise zwei Mischschritte, beispielsweise mit einer Dauer von jeweils ein bis drei Minuten, insbesondere von jeweils zwei Minuten. Dabei erfolgt ein erster Mischschritt vor dem Zugeben der pflanzlichen Proteinzutat, und ein zweiter Mischschritt erfolgt nach dem Zugeben der pflanzlichen Proteinzutat. Auch hierdurch wird die Homogenität der Teigmasse verbessert.

Das erfindungsgemäße Produktionsverfahren dient zur Produktion eines veganen Eigebäck-Ersatzes, wobei das Produktionsverfahren ein Herstellen einer Teigmasse mit einem erfindungsgemäßen Herstellungsverfahren umfasst.

Das Produktionsverfahren umfasst ein Dressieren von Teiglingen aus der Teigmasse auf eine Backunterlage, beispielsweise auf einem Ofenband. Die Teiglinge haben beispielsweise jeweils eine Masse von 5 g bis 20 g, insbesondere von 10 g bis 15 g, bevorzugt von 12 g bis 13 g.

Das Produktionsverfahren umfasst ein Backen der Teiglinge auf der Backunterlage.

Das Backen erfolgt vorzugsweise während einer Backdauer von mindestens 5 min, bevorzugt von mindestens 10 min, und/oder bei einer Backtemperatur von mindestens 280 °C. Mit diesen Parametern kann eine ausreichende Menge von Wasserdampf aus den Teiglingen austreten, sodass die Eigenschaften, insbesondere Restfeuchte, Farbe und Textur, der gebackenen Teiglinge den Eigenschaften eines Eigebäcks ähneln.

Vorzugsweise weisen die gebackenen Teiglinge einen Trocknungsverlust von 12,5 % bis 16,5 % und/oder eine Wasseraktivität von 0,66 bis 0,72, bevorzugt von 0,70 auf. Dies ist für die Haltbarkeit der gebackenen Teiglinge, insbesondere in Form eines schokolierten Gebäcks mit einer Füllung als Dauerbackware, von Vorteil.

Eine Gebäckfarbe der gebackenen Teiglinge hat vorzugsweise einen Helligkeitswert L* von 40 bis 70, bevorzugt von 46 bis 63, nach dem L*a*b*-Farbmodell, wobei die Helligkeitsachse von 0 (schwarz) bis 100 (weiß) verläuft.

Das Produktionsverfahren umfasst vorzugsweise ein Aufschlagen der Teigmasse vor dem Dressieren der Teiglinge. Durch das Aufschlagen bildet die Teigmasse einen Schaum, wodurch ein hohes spezifisches Volumen der gebackenen Teiglinge wie bei einem Eigebäck ergibt.

Das Produktionsverfahren umfasst nach dem Backen der Teiglinge vorzugsweise ein Aufbringen einer festen oder weichen Füllung auf die gebackenen Teiglinge und ein Überziehen der Füllung mit Schokolade. Die Füllung kann wasserbasiert, insbesondere ein Gelee, eine Konfitüre oder eine Marmelade, oder fettbasiert, insbesondere eine Kakaocreme, sein. Die Füllung ist vorzugsweise ein Fruchtgelee, insbesondere eine Fruchtgelee-Linse.

Dabei umfasst der vegane Eigebäck-Ersatz vorzugsweise einen Massenanteil an dem veganen Eigebäck-Ersatz von 40 % bis 60 % Füllung, von 25 % bis 40 % gebackener Teigmasse und von 15 % bis 25 % Schokolade.

### Beispiele

In einer Versuchsreihe werden Teigmassen mit unterschiedlichen Anteilen von pflanzlichen Proteinzutaten als Ei-Ersatz untereinander und mit einer eihaltigen Teigmasse als Referenz verglichen. Die Teigmassen bestehen aus folgenden Zutaten mit den in der Tabelle angegebenen Massenanteilen an der jeweiligen Teigmasse:

| Zutat | Referenz | 1 % Ei-Ersatz | 3 % Ei-Ersatz | 5 % Ei-Ersatz |
|---|---|---|---|---|
| gezuckertes HühnerVollei | 37 % | | | |
| proteinhaltiges Pflanzenextrakt | | 1,0 % | 3,0 % | 5,0 % |
| Wasser | | 17 % | 15 % | 13 % |
| Sirup | | 3,4 % | 3,4 % | 3,4 % |
| Weißzucker | | 16 % | 16 % | 16 % |
| Feuchthaltemittel | 6,0 % | | | |
| Wasser | 5,1 % | | | |
| Emulgator | 4,9 % | | | |
| Weizenmehl Typ 700 | 30 % | | | |
| Stärke | 3,21% | | | |
| Siedespeisesalz | 0,02 % | | | |
| Backtriebmittel | 0,64 % | | | |
| Weißzucker | 6,7 % | | | |
| Palmfett | 6,5 % | | | |

Bei der pflanzlichen Proteinzutat handelt es sich um Erbsenproteinisolat mit einem Protein-Massenanteil von 86 % (im Folgenden kurz als "Erbse" bezeichnet), um Ackerbohnenproteinkonzentrat mit einem Protein-Massenanteil von 65 % (im Folgenden: "Ackerbohne") oder um pulverisiertes Kichererbsenwasser mit einem Protein-Massenanteil von 21 % (im Folgenden: "Aquafaba") als nicht erfindungsgemäßer Vergleich.

Die pflanzliche Proteinzutat wird zunächst mit Wasser, Sirup und Weißzucker zu einer wässrigen Suspension ("Slurry") verrührt.

Die Zutaten bis auf das Palmfett werden in eine Rührschüssel mit einem Volumen von beispielsweise 2 l gegeben. Auch die Zugabe des Slurry oder des Volleis erfolgt zu diesem Zeitpunkt. Die Zutaten werden in einer Planetenrührmaschine mit einem Schneebesen für 2 min bei Stufe 2 gemischt. In der Zwischenzeit wird das Palmfett aufgeschmolzen, welches im Anschluss unter weiterem Rühren bei Stufe 1 innerhalb von 1 min gleichmäßig in die Masse laufen gelassen wird. Die Teigmasse wird im Anschluss in einem Mixer so lange strukturiert bis ein spezifisches Schaumgewicht von (800 ± 50) g/l erreicht ist.

Anschließend wird die Teigmasse mit Hilfe einer 5 mm hohen Schablone gleichmäßig auf einem Backpapier verteilt. Das Backpapier wird auf ein vorgeheiztes Backblech gezogen und während 14 min bei 180 °C bis 200 °C Ober- und Unterhitze in einem Strahlungsofen gebacken. Nach vollständigem Abkühlen des Gebäcks werden die Versuchsproben mit einer Weißfolie luftdicht verpackt und bis zu den jeweiligen Messungen bei 18 °C gelagert.

Als Parameter zur Bestimmung der Schaumeigenschaften wird das Schaumbildungsvermögen über die Bestimmung der Rohdichte der Teigmassen erfasst, welche nach der Vermischung der Zutaten ermittelt wird. Hierfür wird die Rohmasse in einen zuvor tarierten Messzylinder mit einem Volumen von 0,1 l gefüllt. Im Anschluss wird der befüllte Messzylinder gewogen, um die Rohdichte der Teigmasse zu bestimmen. Analog dazu wird das spezifische Schaumgewicht bestimmt. Darunter ist die Dichte der Teigmasse nach erfolgreichem Aufschlagen zu verstehen. Ein definiertes spezifisches Schaumgewicht der Teigmasse von (800 ± 50) g/l ist aus Produktionssicht bedeutsam, damit standardisierte Backergebnisse erzielt werden.

Darüber hinaus erfolgt zur Bestimmung der Schaumeigenschaften die Ermittlung der Schaumstabilität. Dafür wird ein zylinderförmiger Behälter mit Deckel mit der Teigmasse nach Einstellung des spezifischen Schaumgewichts mit einem Volumen von 10 ml befüllt. Die Proben werden bei Umgebungstemperatur gelagert und das Schaumvolumen wird nach 5 min, 1 h, 4 h und 24 h abgelesen.

Für die Messung der Restfeuchte des Eigebäck-Ersatzes und des Eigebäcks wird ein Halogen-Trockner vom Typ "Moisture Analyzer HX204" verwendet. Es werden mindestens 15 g des Gebäcks für 10 s mit einer Küchenmaschine vom Typ "CH580" zerkleinert und 3 g der zerkleinerten Probe werden auf eine Aluminiumschale in den Trockner eingewogen und gleichmäßig verteilt. Die Probe wird bei 105 °C so lange erhitzt, bis innerhalb von 50 s weniger als 3 mg Wasser verdampfen. Folglich wird der Feuchtegehalt der Gebäcke über den Gewichtsverlust berechnet. Die Messung der Restfeuchte erfolgt 3 h nach dem Backen.

Die Farbmessung des Eigebäck-Ersatzes und des Eigebäcks erfolgt mit einem Farbmessgerät vom Typ "MiniScan EZ" von Hunter Lab mit einer Messblende mit einem Durchmesser von 12 mm. Die Farbe wurde durch das Messgerät nach dem L*a*b*-Farbmodell erfasst, welches aus drei Achsen besteht. Die Helligkeitsachse (L*) verläuft von +100 (weiß) bis 0 (schwarz). Je größer die Abweichung der Rot-Grün-Achse (a*) und der Blau-Gelb-Achse (b*) vom Nullpunkt, umso intensiver ist die jeweilige Farbe. Zusammen ergeben die Koordinatenachsen einen dreidimensionalen Farbraum. Vor der Messung wird das Messgerät mit einer weißen und einer schwarzen Fläche kalibriert. Anschließend wird die Probe an die Öffnung der Messblende gehalten, um die die L*-, a*- und b*-Werte zu ermitteln. Bei dem Eigebäck und Eigebäck-Ersatz ist besonders der L*-Wert von Bedeutung, da er eine Aussage über den Grad der Bräunung liefert.

Das Volumen des Gebäcks wird mittels der "seed displacement method" ermittelt. Hierfür wird ein 0,25-Liter-Behälter mit Reiscrisps befüllt. Die im Behälter befindliche Menge an Reiscrisps wird als Null-Volumen bezeichnet. Aus dem Gebäck werden mit Hilfe eines kreisförmigen Ausstechers (Durchmesser 40 mm) Proben ausgestochen. Anschließend wird das jeweilige Gewicht der Proben ermittelt. Der 0,25-Liter-Behälter wird bis zur Hälfte mit den Reiscrisps des Null-Volumens befüllt. Das ausgestochene Gebäck wird dann in den Behälter gegeben. Der Behälter wird anschließend mit den restlichen Reiscrisps des Null-Volumens aufgefüllt. Die nicht in den Behälter passenden Reiscrisps des Null-Volumens werden in einen Messzylinder gegeben, um das Volumen der verdrängten Reiscrisps und somit das Volumen des Gebäcks zu ermitteln.

Die rheologischen Untersuchungen der Teigmassen werden mittels Amplitudentests mit einem Rheometer vom Typ "MCR 302" durchgeführt. Die Versuchseinstellungen sind in der folgenden Tabelle aufgeführt:

| Parameter | Einstellung |
|---|---|
| Temperatur | 25 °C |
| Kreisfrequenz | 10 rad/s |
| Amplitude | 0,001 - 100 % |
| Messgeometrie | Platte-Platte |
| Messspaltbreite | 1 mm |

Unmittelbar nach der Einstellung des definierten spezifischen Schaumgewichts werden die Teigmassen auf die unbewegliche Platte aufgetragen. Danach wird die Messplatte auf den eingestellten Messspalt heruntergefahren. Im Anschluss wird zwischen den Platten herausgedrücktes Material vorsichtig vom Rand entfernt. Zusätzlich wird die Probe mit Öl umrandet. Dies soll verhindern, dass Wasser verdampft und die Probe antrocknet. Danach erfolgt eine kurze Regenerationsphase von 60 s. Anschließend wird die Messung gestartet.

Die sensorische Bewertung der Gebäcke erfolgt anhand ausgewählter Proben mittels eines Sensorikpanels. Bis zur sensorischen Verkostung werden die Proben in einer metallisierten Folie verpackt und für 6 Tage bei 18 °C gelagert. Die sensorischen Eigenschaften wurden anhand zwei verschiedener Prüfungen (Difference from Control und Profilprüfung mit Skala) durchgeführt. An der sensorischen Verkostung nehmen 21 Prüfpersonen teil, welche zu dem geschulten Sensorikpanel der Anmelderin gehören. Die Sensoriktests werden unter Rotlicht durchgeführt, sodass die prüfenden Personen nicht durch visuelle Eindrücke beeinflusst werden. Es wird auf eine einheitliche Probendarreichung geachtet.

Die diskriminierende Prüfung "Difference from Control" untersucht die Fragestellung, ob bei verschiedener Rezeptur ein Unterschied zwischen den Proben wahrnehmbar ist und ob dieser signifikant ist. Das Ziel der "Difference from Control" ist, die Stärke der Abweichung zwischen den Proben und einer Referenz zu ermitteln. Dafür werden die Unterschiede der Proben anhand einer Unterschiedsskale eingeschätzt, und die Abweichung wird beschrieben. Die Prüfenden erhalten zunächst eine offene Referenz (hier Eigebäck) um sich mit dem Standard vertraut zu machen. Im Anschluss werden vier Proben inklusive einer verdeckten Referenzprobe gereicht, wobei die Probenreihenfolge von Panelist zu Panelist systematisch rotiert. Die prüfende Person beurteilt die Proben im Vergleich zur offenen Referenz. Dabei werden der Geruch, die Textur und der Geschmack betrachtet.

Darüber hinaus werden in der deskriptiven Prüfung "Profilprüfung mit Skala" die Unterschiede der Proben von der Referenz quantifiziert. Hierfür werden die Eigenschaften Geruch, Textur und Geschmack anhand einer Skala quantifiziert. Die folgenden Attribute werden jeweils auf einer Skala von 1 bis 5 bewertet: Akzeptanz des Geruchs, Feuchte, Weichheitsgrad, Abwesenheit von Klebrigkeit und Akzeptanz des Geschmacks.

Das Schaumbildungsvermögen der Proteine verschiedener Herkunft, also der Lufteintrag in die Teigmasse, ist über die Rohdichte der Teigmasse zu erfassen. Die Rohdichte wird nach der Vermischung der Zutaten ermittelt. Während der Vermischung der Zutaten zu einer homogenen Masse wird auch Luft aus der umgebenden Luftatmosphäre in die Teigmasse eingeschlagen. Die Rohdichte der Teigmasse nach der Vermischung zeigt folglich den Einfluss der unterschiedlichen Proteinsorten und -mengen auf das Schaumbildungsvermögen. Je geringer die Rohdichte ist, desto mehr Gasblasen werden in der Teigmatrix gehalten.

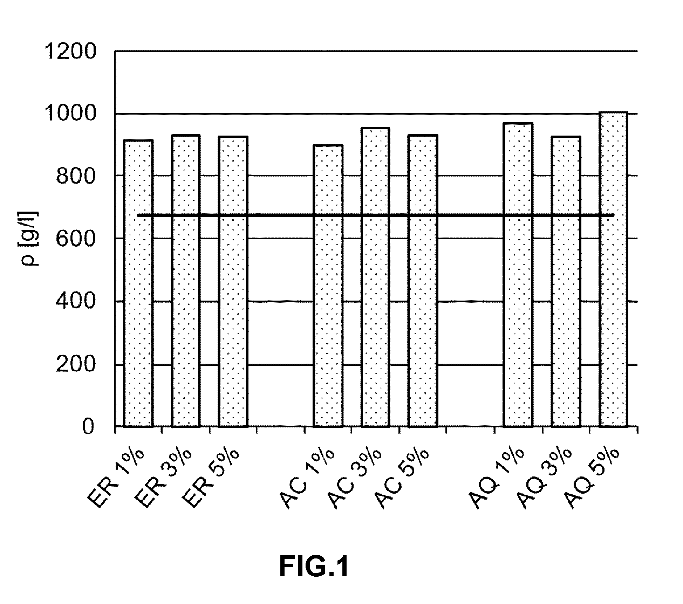

In Figur 1 ist die Rohdichte ρ der Teigmassen mit unterschiedlichen Arten und Mengen pflanzlicher Proteinzutaten (Säulen) im Vergleich zur Referenz mit Vollei (horizontale Linie) dargestellt, welche nach einer Rührzeit von 2 min bei Stufe 2 und 1 min bei Stufe 1 in der Planetenrührmaschine erreicht werden. In dieser und den folgenden Figuren wird eine Teigmasse mit 1 %, 3 % oder 5 % Erbsenproteinisolat als pflanzlicher Proteinzutat mit "ER 1%", "ER 3 %" oder "ER 5%" bezeichnet. Eine Teigmasse mit 1 %, 3 % oder 5 % Ackerbohnenkonzentrat als pflanzlicher Proteinzutat wird mit "AC 1%", "AC 3 %" oder "AC 5%" bezeichnet. Eine nicht erfindungsgemäße Teigmasse mit 1 %, 3 % oder 5 % pulverisiertem Kichererbsenwasser als pflanzlicher Proteinzutat wird mit "AQ 1%", "AQ 3%" oder "AQ 5%" bezeichnet.

Es ist deutlich zu sehen, dass keine der veganen Alternativen an das Schaumbildungsvermögen der Referenz herankommt, welche über eine Dichte von 676 g/l verfügt. Der Vergleich der Versuchsreihen zeigt, dass alle Rohdichten der Teigmassen mit Erbse, Ackerbohne oder Aquafaba (nicht erfindungsgemäß) sehr nah beieinanderliegen. Ein Einfluss der Dosierung auf die Rohdichte ist nicht erkennbar.

Die Stabilität des Schaums nach dem Aufschlagen ist ein wichtiger Parameter dafür, ob die Masse für eine gewisse Standzeit ohne Volumenrückgang geeignet ist. Prozessbedingt kommt es bei der Produktion von Eigebäck zu Standzeiten von 30 min bis 60 min. Das Schaumvolumen bleibt bei allen Proben während der maximalen Messdauer von 24 h unverändert. Dies bedeutet, dass die pflanzlichen Proteine den Schaum so gut wie das Hühnervollei stabilisieren.

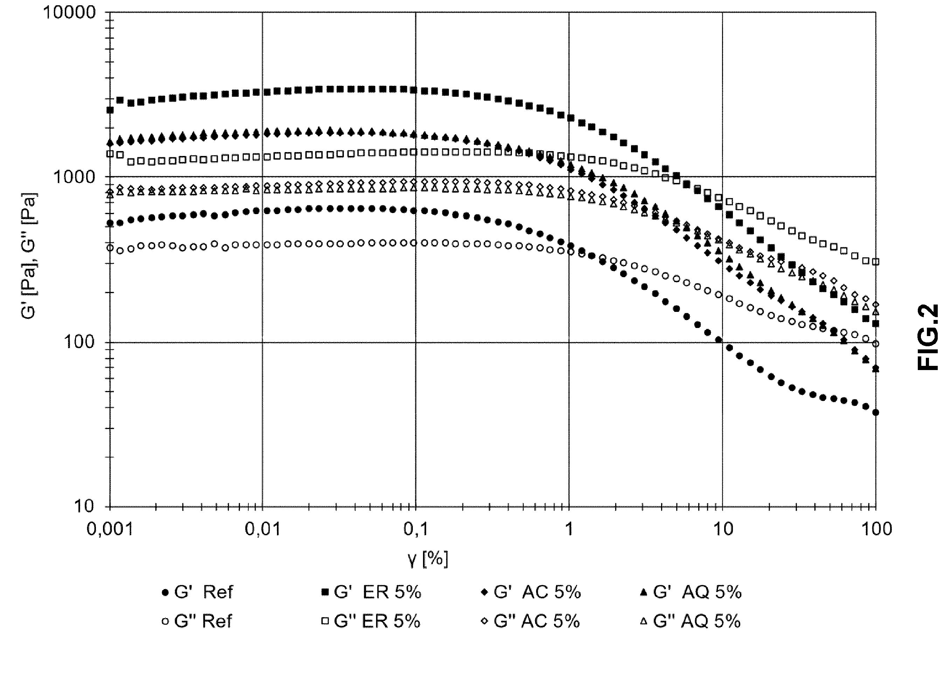

Das rheologische Verhalten der Teigmassen wird zunächst anhand der graphischen Darstellung der in Figur 2 gezeigten Kurvenverläufe des Speichermoduls G' (beschreibt elastischen Anteil, gefüllte Symbole in Figur 2) und des Verlustmoduls G" (beschreibt viskosen Anteil, ungefüllte Symbole in Figur 2) der Amplitudentests abhängig von der relativen Scherdeformation γ der Proben beschrieben. In Figur 2 sind zur besseren Übersicht nur die Kurvenverläufe der Referenz (hier und in den folgenden Figuren mit "Ref" bezeichnet) und der Teigmassen mit der jeweils höchsten Dosierung der pflanzlichen Proteinzutaten aus Erbse, Ackerbohne und Aquafaba (nicht erfindungsgemäß) dargestellt.

Alle Teigmassen weisen in einem Amplitudenbereich von 0,01 % bis 0,1 % ein Plateau des Speichermoduls G' auf. Für jede Teigmasse liegt innerhalb des Plateaus (linear-viskoelastischer Bereich, LVE-Bereich) der Speichermodul G' über dem Verlustmodul G". Der LVE-Bereich ist der Bereich, in dem trotz Deformation keine signifikante Änderung der Probenstruktur vorliegt. Dies bedeutet, dass im LVE-Bereich der elastische Anteil dominiert und die Proben einen Gel-Charakter haben. Dabei wird der Speichermodul G' als Kenngröße zur Charakterisierung der Gelstärke im LVE-Bereich verwendet.

Oberhalb einer bestimmten Scherdeformation beginnt der Speichermodul G' abzufallen, und der LVE-Bereich wird verlassen. Der Schnittpunkt von Speichermodul G' und Verlustmodul G" wird als Fließgrenze bezeichnet. Hier ändert sich der Gel-Charakter der Teigmasse zu einem Sol-Charakter, bei dem der viskose Anteil dominiert. Für den Übergang vom Gel zum Sol wird eine definierte Schubspannung τ benötigt, die die Teigmasse zum Fließen bringt.

Vergleicht man alle Teigmassen hinsichtlich ihres Speichermoduls G' (elastischer Anteil der Probe) können die Proben in folgende Rangfolge gebracht werden: "Referenz" < "Ackerbohne" < "Aquafaba" (nicht erfindungsgemäß) < "Erbse". Die gleiche Abfolge gilt auch für die benötigte Schubspannung, damit die jeweilige Teigmasse fließt. Bei der Referenz muss die geringste Energie zugeführt werden, wohingegen bei den erbsenhaltigen Proben die meiste Energie benötigt wird.

Die Referenz besitzt bei einer Scherdeformation γ = 0,0321 % den geringsten Speichermodul mit 645 Pa. Dies bedeutet, dass bei dieser Teigmasse der elastische Anteil am wenigsten ausgeprägt ist und folglich die Teigmasse am wenigsten elastisch von allen Teigmassen ist. Dies bestätigt auch die niedrigste Schubspannung aller Teigmassen an der Fließgrenze mit 6,56 Pa. Bei dieser Teigmasse muss mit Abstand die niedrigste Schubspannung aufgebracht werden, damit die Teigmasse zu fließen beginnt.

Die Teigmasse mit Erbse verfügt über den am stärksten ausgeprägten Gel-Charakter im LVE-Bereich. Der maximale Speichermodul wird bei der fünfprozentigen Dosierung erreicht mit 3435 Pa. Hervorzuheben ist, dass die Teigmasse "Erbse 5 %" bei einer Schubspannung von 77,6 Pa die höchste Fließgrenze aller Teigmassen besitzt. Für folgende Prozessschritte wie beispielsweise Pumpvorgänge oder Dressieren bedeutet dies, dass bei dieser Teigmasse die größte Energie benötigt wird, damit die Teigmasse bei gleichbleibender Prozessleistung gepumpt oder dressiert werden kann.

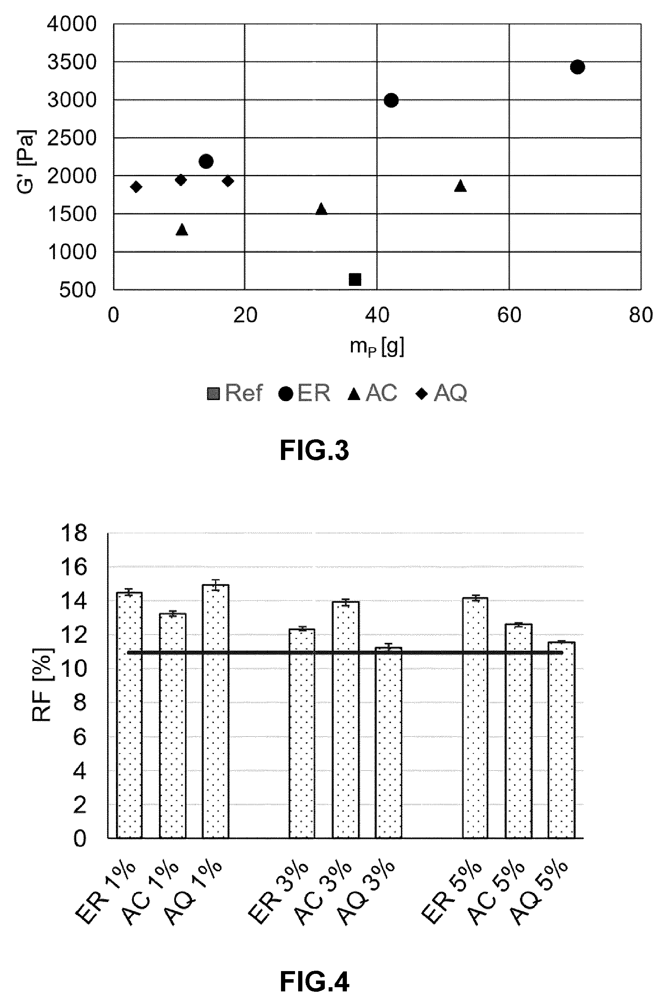

Figur 3 zeigt den Einfluss der Proteinmasse m_{P} pro Slurry-Einheit von 293 g in den Teigmassen auf den Speichermodul G' im LVE-Bereich bei einer Scherdeformation γ = 0,0321 % im Vergleich zur Referenz-Teigmasse mit Vollei. Für die Teigmassen "Erbse" und "Ackerbohne" steigt der Speichermodul und somit die Elastizität der Teigmassen mit zunehmender Proteinmenge deutlich an ("Erbse 1 %": 2201 Pa, "Erbse 5 %": 3435 Pa, "Ackerbohne 1 %": 1292 Pa, "Ackerbohne 5%": 1861 Pa"). Für die Teigmassen "Aquafaba" (nicht erfindungsgemäß) ist nur ein leichter Anstieg erkennbar ("Aquafaba 1 %": 1848 Pa, "Aquafaba 5 %": 1923 Pa).

Die Restfeuchte umfasst das freie und gebundene Wasser in einem Gebäck. Diese beinhaltet auch das Ergebnis der Wasserhaltekapazität der eingesetzten Proteine. Der Feuchtegehalt der Gebäcke ist aus mikrobiologischer Sicht für die Einhaltung des Mindesthaltbarkeitsdatums von großer Bedeutung. Für talerförmiges Eigebäck liegt der zulässige Maximalwert der Restfeuchte bei 9 % bis 11 %.

Figur 4 zeigt die Restfeuchte RF von mit unterschiedlichen Arten und Mengen pflanzlicher Proteinzutaten hergestelltem Eigebäck-Ersatz (Säulen) im Vergleich zur Restfeuchte des aus der Referenz-Teigmasse mit Vollei hergestellten Eigebäcks (horizontale Linie). Die niedrigste Restfeuchte aller Gebäcke wurde bei der Referenz mit 11 % ermittelt.

Innerhalb der Dosierung der pflanzlichen Proteinzutat von 1 % besitzt das Gebäck mit Aquafaba (nicht erfindungsgemäß) die höchste Restfeuchte gefolgt von Erbse und Ackerbohne. Für die dreiprozentige und fünfprozentige Dosierung liegt die höchste Restfeuchte bei den Gebäcken mit Ackerbohne und Erbse vor, und die Restfeuchte mit Aquafaba (nicht erfindungsgemäß) ist deutlich niedriger. Die Restfeuchte der Backwaren mit Aquafaba (nicht erfindungsgemäß) bei drei- und fünfprozentiger Dosierung ähnelt der Restfeuchte der Referenz.

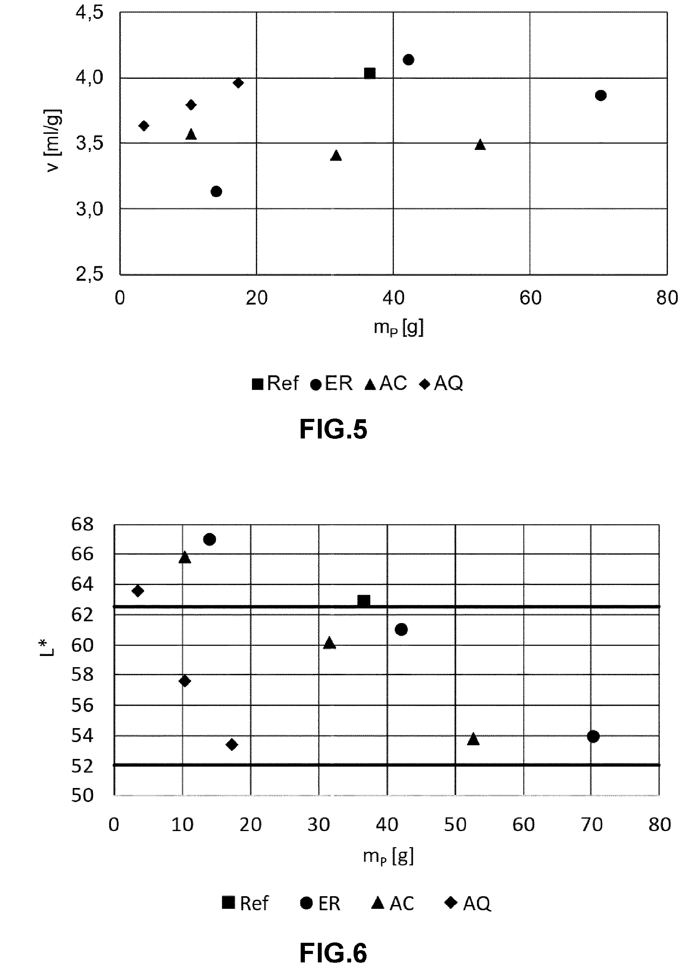

Das spezifische Volumen der Gebäcke stellt ein wichtiges Kriterium zur Bewertung der Backware dar. Durch das Volumen kann die Stabilität des Protein-Netzwerkes beurteilt werden. Denn je besser die durch das Aufschlagen eingebrachte Luft durch die Emulgiereigenschaft der Proteine in der Rohmasse stabilisiert wird, und je besser die Gasblasen während des Backvorgangs in der Teigmatrix gehalten werden, desto höher ist das resultierende spezifische Volumen. In Figur 5 ist das spezifische Volumen v der Backwaren in Abhängigkeit der Proteinart und Proteinmasse m_{P} pro Slurry-Einheit von 293 g im Vergleich zur Referenz dargestellt. Hervorzuheben ist, dass das spezifische Schaumgewicht aller Teigmassen vor dem Backen auf (800 ± 50) g/l eingestellt wurde, sodass für alle Proben bezüglich eingeschlossener Gasblasen in der Teigmatrix die gleichen Voraussetzungen gelten.

Die größten spezifischen Volumina werden von den Proben "Erbse 3 %", "Referenz" sowie "Aquafaba 5 %" (nicht erfindungsgemäß) erreicht. Es liegen folglich gelockerte Gebäcke mit viel eingeschlossener Luft vor. Das Gebäck "Referenz" erzielt mit einer Proteinmenge von 37 g ein spezifisches Volumen von 4,0 ml/g. Die Proteine der Erbse erzielen bei leicht erhöhter Proteinmenge (42 g) ein vergleichbares spezifisches Volumen von 4,1 ml/g. Ein ähnliches spezifisches Volumen von 4,0 mg/l erzielen die Proteine des Aquafaba (nicht erfindungsgemäß), allerdings werden für dieses Volumen nur 17 g Protein benötigt. Für die Versuchsreihe mit Aquafaba (nicht erfindungsgemäß) nimmt das spezifische Volumen mit Erhöhung der Proteindosierung zu. Die Versuchsreihen mit Erbse und Ackerbohne hingegen zeigen keine Korrelation zwischen Proteinmenge und spezifischem Volumen.

Die Gebäckbräunung stellt ein weiteres Qualitätsmerkmal einer Backware dar. Diesbezüglich wird der Einfluss der pflanzlichen Proteine auf die Bräunung hinsichtlich Proteinsorte und Proteinmasse m_{P} pro Slurry-Einheit von 293 g untersucht und in Figur 6 gezeigt. Ausschlaggebend für die Gebäckbräunung ist der L*-Wert der einzelnen Gebäcke, der von 100 (weiß) bis 0 (schwarz) reicht. Dies bedeutet je kleiner der L*-Wert ist, umso stärker ist der Grad der Bräunung.

Für die Referenz wird ein L*-Wert von 63 ermittelt. Der Bräunungsgrad der veganen Gebäcke nimmt abhängig von der Art der pflanzlichen Proteinzutat in folgender Reihenfolge ab: "Aquafaba" (nicht erfindungsgemäß) > "Ackerbohne" > "Erbse". Mit zunehmender Dosierung der Proteine nimmt die Gebäckbräunung für alle Proteinarten zu. Bei dreiprozentiger und fünfprozentiger Dosierung liegt der Bräunungsgrad für alle Proteinarten im Zielbereich eines L*-Werts von 52 bis 62,5 (horizontale Linien in Figur 6). Die Gebäcke "Erbse 3 %" und "Ackerbohne 3 %" bilden die Bräunung der Referenz am besten nach.

Mit der Untersuchung "Difference from Control" wird überprüft, ob die Gebäckproben mit pflanzlicher Proteinzutat einen Unterschied zu der Referenz-Gebäckprobe mit Vollei aufweisen. Dafür werden folgende vier Proben gegen die offen gereichte Referenz verdeckt verkostet: "Referenz", "Erbse 3 %", "Ackerbohne 3 %" und "Aquafaba 3 %" (nicht erfindungsgemäß). Eine der vier gereichten Vergleichsproben stellt somit die Referenz als Kontrolle dar. Hinsichtlich dieses Tests ist ein Begrenzung der Probenanzahl notwendig, damit die sensorische Wahrnehmung der prüfenden Personen nicht zu stark ermüdet über die Verkostungsdauer hinweg. Da die Dosierung der pflanzlichen Proteinzutat von 3 % die meisten physikochemischen Merkmale bezogen auf die Referenz nachbildet, wird diese Dosierung für die sensorischen Verkostungen verwendet. Der Einfluss der pflanzlichen Proteine wurde hinsichtlich der Parameter Geruch, Textur und Geschmack charakterisiert.

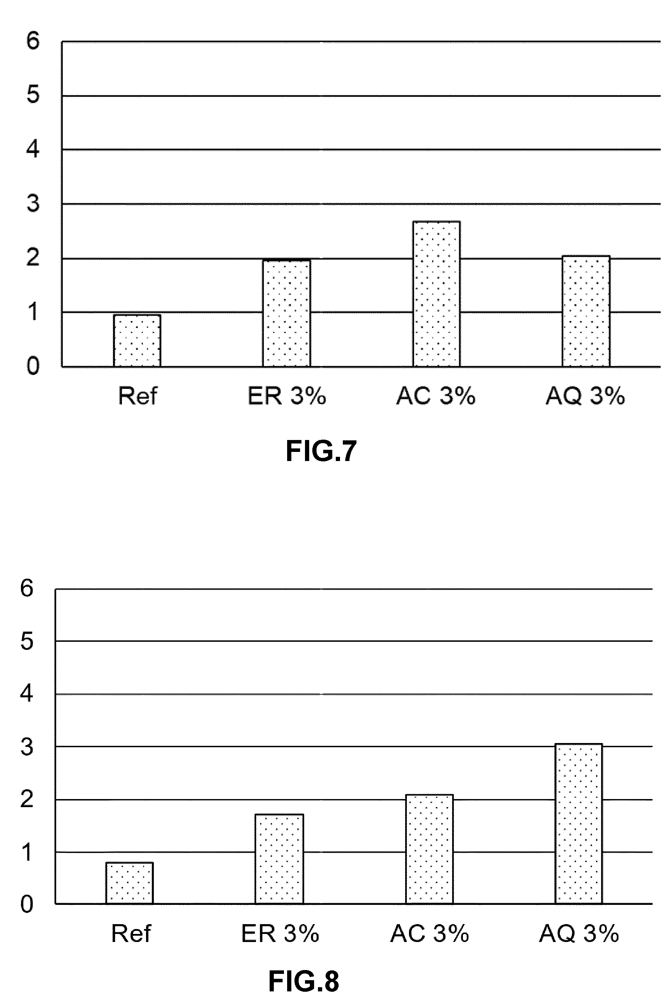

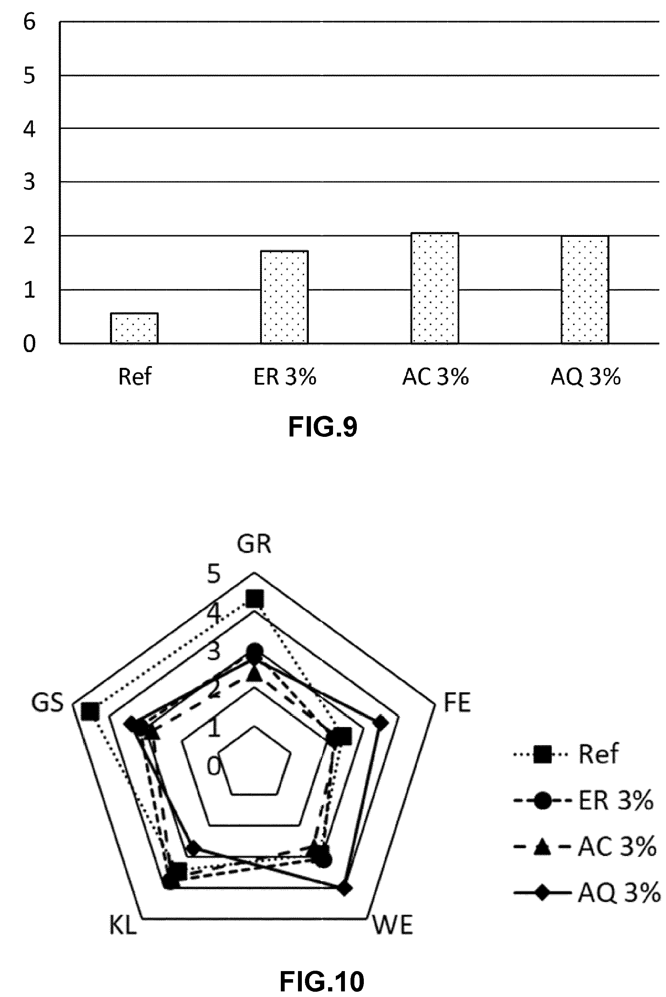

Die Figuren 7 bis 9 zeigen den ermittelten Grad der Abweichung zur offen gereichten Referenz in den Parametern Geruch (Figur 7), Textur (Figur 8) und Geschmack (Figur 9) auf einer Skala von 0 (kein Unterschied) bis 6 (sehr großer Unterschied).

Hinsichtlich des Geruchs ist in Figur 7 zu erkennen, dass die Probe "Ackerbohne 3 %" einen signifikanten Unterschied zu der Referenz besitzt. Angemerkt wird von vier Personen bei der Probe "Ackerbohne 3 %", dass eine Fremdnote im Geruch wahrnehmbar sei und die Geruchsnote "Ei" fehlte oder schwächer wahrzunehmen sei. Die Proben "Erbse 3 %" und "Aquafaba 3 %" (nicht erfindungsgemäß) unterscheiden sich weder von der Referenz noch von "Ackerbohne 3 %" signifikant.

Bezüglich der Textur kann festgehalten werden (Figur 8), dass zwischen den Proben "Erbse 3 %" und "Referenz" erneut kein signifikanter Unterschied vorliegt. Dagegen wurden für die Versuchsmuster "Ackerbohne 3 %" und "Aquafaba 3 %" (nicht erfindungsgemäß) signifikante Unterschiede zur "Referenz" festgestellt. Anders als beim Parameter Geruch wird die Versuchsprobe "Aquafaba 3 %" (nicht erfindungsgemäß) am stärksten abweichend von der offen gereichten Referenz bewertet. Das Gebäck mit Aquafaba (nicht erfindungsgemäß) wurde vom Sensorikpanel als weicher und klebriger als die Referenz beschrieben.

Eindeutige Ergebnisse hinsichtlich des Einflusses der pflanzlichen Proteine liegen bezogen auf den Geschmack vor (Figur 9). Die Probe "Referenz" unterscheidet sich signifikant von den drei veganen Proben. Angemerkt wird von sieben Personen, dass das Gebäck mit Aquafaba (nicht erfindungsgemäß) süßer schmecke. Vier Panelisten merken bei Aquafaba (nicht erfindungsgemäß) eine fehlende oder abgeschwächte Ei-Note an. Für das Versuchsmuster mit Erbse wird am häufigsten eine mehligere und süßere Geschmackswahrnehmung genannt. In den Kommentaren über das Gebäck mit Ackerbohne wird am häufigsten ein abweichender Beigeschmack und eine Fehlnote im Nachgeschmack genannt.

Ergänzend zu dem Test "Difference from Control" werden anhand der "Profilprüfung mit Skala" die detaillierten Unterschiede in Geruch, Textur (Feuchte, Härtegrad und Klebrigkeit) und Geschmack charakterisiert werden. Die Ergebnisse wurden in Figur 10 in einem Spinnennetzdiagramm gezeigt. Die Bewertung erfolgt jeweils mit einer fünfstufigen Skala. Für die jeweiligen Parameter zählt folgende Skalierung: Geruch GE: 0 = nicht akzeptiert bis 5 = akzeptiert, Feuchte FE: 0 = sehr trocken bis 5 = sehr feucht, Weichheitsgrad WE: 0 = sehr hart bis 5 = sehr weich, Abwesenheit von Klebrigkeit KL: 0 = klebt am Gaumen bis 5 = klebt nicht am Gaumen, Geschmack GS: 0 = nicht akzeptiert bis 5 = akzeptiert.

Insgesamt bestehen signifikante Unterschiede zwischen den vier verkosteten Proben hinsichtlich aller untersuchten Parameter mit der Ausnahme des Parameters Klebrigkeit. Hinsichtlich der Akzeptanz des Geruchs ist zu erkennen, dass der Geruch der Probe "Referenz" von den prüfenden Personen signifikant mehr akzeptiert wird als die veganen Gebäcke. Die Ergebnisse zu den Parametern Feuchte und Härte zeigen, dass das Gebäck "Aquafaba 3 %" (nicht erfindungsgemäß) signifikant weicher und feuchter wahrgenommen wird als die Referenz. Die Proben mit "Ackerbohne 3 %" und "Erbse 3 %" unterschieden sich hinsichtlich der beiden Parameter Feuchte und Härte nicht signifikant von der Referenz. Aufgrund der großen Varianzen bei der Bewertung des Parameters Klebrigkeit können keine signifikanten Unterschiede zwischen der Referenz und den veganen Gebäcken festgestellt werden. Bezüglich der Akzeptanz des Geschmacks wurde die Probe "Referenz" analog zum Parameter Geruch am meisten akzeptiert und unterscheidet sich signifikant von den veganen Gebäcken.

Zusammenfassend ergibt die Profilprüfung mit Skala, dass die Probe "Referenz" hinsichtlich des Geruchs und des Geschmacks am besten akzeptiert wurde, gefolgt von den Gebäcken "Erbse 3 %" und "Aquafaba 3 %" (nicht erfindungsgemäß). In den Parametern Härte und Feuchte entsprechen die Proben "Erbse 3 %" und "Ackerbohne 3 %" der Referenz.

Die Untersuchungen beispielhafter erfindungsgemäßer Teigmassen mit pflanzlichen Proteinzutaten zeigen, dass die untersuchten Teigmassen dazu geeignet sind, einen veganen Eigebäck-Ersatz als Dauerbackware herzustellen, der die Eigenschaften von Eigebäck nachbildet. Von den untersuchten Teigmassen ist dabei die Rezeptur "Erbse 3 %" favorisiert, weil mit ihr die physikochemischen Merkmale des Eigebäcks am überzeugendsten nachgebildet werden und die höchste Übereinstimmung mit der sensorischen Wahrnehmung von Eigebäck erzielt wird.

## Patentansprüche

1. Vegane Teigmasse für die Produktion eines veganen Eigebäck-Ersatzes als Dauerbackware, wobei die Teigmasse folgende Zutaten mit den genannten Massenanteilen an der Teigmasse enthält:
a. von 20 % bis 40 % Mehl,
b. von 15 % bis 35 % Zucker,
c. von 15 % bis 30 % Wasser,
d. von 5 % bis 10 % Pflanzenfett und
e. von 1 % bis 5 % einer aus Erbsen und/oder Ackerbohnen gewonnenen pflanzlichen Proteinzutat, wobei die pflanzliche Proteinzutat einen Protein-Massenanteil an einer Trockenmasse der pflanzlichen Proteinzutat von mindestens 50 % hat,
**dadurch gekennzeichnet, dass**
die Teigmasse ein Feuchthaltemittel mit einem Massenanteil an der Teigmasse von 4 % bis 10 % enthält, und
dass das Pflanzenfett bei 20 °C einen Festfettgehalt von mindestens 10 %, und/oder bei 30 °C einen Festfettgehalt von mindestens 5 % aufweist.

2. Vegane Teigmasse nach Anspruch 1,
wobei die pflanzliche Proteinzutat einen Protein-Massenanteil an einer Trockenmasse der pflanzlichen Proteinzutat von mindestens 75 %, bevorzugt von mindestens 80 %, hat.

3. Vegane Teigmasse nach einem der Ansprüche 1 bis 2,
wobei das Pflanzenfett bei 20 °C einen Festfettgehalt von mindestens 15 % und/oder bei 30 °C einen Festfettgehalt von mindestens 10 % aufweist.

4. Vegane Teigmasse nach einem der Ansprüche 1 bis 3,
wobei die Teigmasse folgende Zutaten mit den genannten Massenanteilen an der Teigmasse enthält
a. von 0,2 % bis 0,8 %, bevorzugt von 0,4 % bis 0,6 %, Emulgator,
b. von 1 % bis 5 %, bevorzugt von 2 % bis 4 %, Stärke,
c. von 0,2 % bis 1,2 %, bevorzugt von 0,4 % bis 0,8 %, Backtriebmittel, und/oder
d. von 0,01 % bis 0,05 %, bevorzugt 0,03 %, Speisesalz

5. Veganer Eigebäck-Ersatz umfassend folgende Komponenten mit den genannten Massenanteilen an dem veganen Eigebäck-Ersatz:
a. von 25 % bis 40 % gebackene vegane Teigmasse nach einem der Ansprüche 1 bis 4,
b. von 40 % bis 60 % auf der gebackenen Teigmasse aufgebrachte Füllung und
c. von 15 % bis 25 % auf der Füllung aufgebrachte Schokolade in Form eines Schokoladen-Überzugs.

6. Herstellungsverfahren, umfassend eine Herstellung einer veganen Teigmasse nach einem der Ansprüche 1 bis 4, wobei das Herstellungsverfahren folgende Schritte umfasst:
a. Zugeben der Zutaten der veganen Teigmasse in einen Mischbehälter und
b. Vermischen der Zutaten in dem Mischbehälter,
c. wobei vor dem Zugeben der pflanzlichen Proteinzutat in den Mischbehälter aus der pflanzlichen Proteinzutat eine wässrige Suspension erstellt wird.

7. Herstellungsverfahren nach Anspruch 6,
wobei die wässrige Suspension folgende Komponenten mit den genannten Massenanteilen an der wässrigen Suspension enthält:
a. von 60 % bis 80 % Wasser und
b. von 10 % bis 20 % der pflanzlichen Proteinzutat und
c. bevorzugt von 10 % bis 20 % Sirup.

8. Herstellungsverfahren nach einem der Ansprüche 6 bis 7,
wobei das Zugeben des Pflanzenfetts in flüssigem Zustand und vor dem Zugeben der übrigen Zutaten erfolgt.

9. Herstellungsverfahren nach einem der Ansprüche 6 bis 8,
wobei das Zugeben der pflanzlichen Proteinzutat nach dem Zugeben der übrigen Zutaten erfolgt.

10. Herstellungsverfahren nach einem der Ansprüche 6 bis 9,
wobei das Vermischen mindestens zwei Mischschritte umfasst, wobei ein erster Mischschritt vor dem Zugeben der pflanzlichen Proteinzutat erfolgt, und ein zweiter Mischschritt nach dem Zugeben der pflanzlichen Proteinzutat erfolgt.

11. Produktionsverfahren, umfassend eine Produktion eines veganen Eigebäck-Ersatzes, wobei das Produktionsverfahren folgende Schritte umfasst:
a. Herstellen einer veganen Teigmasse mit einem Herstellungsverfahren nach einem der Ansprüche 6 bis 10,
b. Dressieren von Teiglingen aus der Teigmasse auf eine Backunterlage,
c. Backen der Teiglinge auf der Backunterlage.

12. Produktionsverfahren nach Anspruch 11,
wobei das Backen
a. während einer Backdauer von mindestens 5 min, bevorzugt von mindestens 10 min, und/oder
b. bei einer Backtemperatur von mindestens 280 °C erfolgt.

13. Produktionsverfahren nach Anspruch 11 oder 12,
wobei das Produktionsverfahren ein Aufschlagen der veganen Teigmasse vor dem Dressieren der Teiglinge umfasst.

14. Produktionsverfahren nach einem der Ansprüche 11 bis 13,
wobei das Produktionsverfahren nach dem Backen der Teiglinge
a. ein Aufbringen einer Füllung auf die gebackenen Teiglinge und
b. ein Überziehen der Füllung mit Schokolade umfasst,
wobei der vegane Eigebäck-Ersatz folgende Massenanteile an dem veganen Eigebäck-Ersatz umfasst:
c. von 40 % bis 60 % Füllung,
d. von 25 % bis 40 % gebackene Teigmasse und
e. von 15 % bis 25 % Schokolade.

## Claims

1. A vegan dough mass for the production of a vegan egg pastry substitute as a long-life baked good;
wherein the vegan dough mass contains the following ingredients with the stated mass fractions of the vegan dough mass:
a. from 20 % to 40 % flour,
b. from 15 % to 35 % sugar,
c. from 15 % to 30 % water,
d. from 5 % to 10 % vegetable fat and
e. from 1 % to 5 % of a vegetable protein ingredient obtained from peas and/or field beans, the vegetable protein ingredient having a protein mass fraction of at least 50 % of a dry mass of the vegetable protein ingredient;
**characterized in that**
the vegan dough mass contains a humectant with a mass fraction of the vegan dough mass of from 4 % to 10 %; and
the vegetable fat has a solid fat content of at least 10 % at 20 °C and/or a solid fat content of at least 5 % at 30 °C.

2. The vegan dough mass according to claim 1,
wherein the vegetable protein ingredient has a protein mass fraction of a dry mass of the vegetable protein ingredient of at least 75 %, preferably at least 80 %.

3. The vegan dough mass according to claim 1 or 2,
wherein the vegetable fat has a solid fat content of at least 15 % at 20 °C and/or a solid fat content of at least 10 % at 30 °C.

4. The vegan dough mass according to any one of claims 1 to 3,
wherein the vegan dough mass contains the following ingredients with the stated mass fractions of the vegan dough mass:
a. from 0.2 % to 0.8 %, preferably from 0.4 % to 0.6 %, emulsifier,
b. from 1 % to 5 %, preferably from 2 % to 4 %, starch,
c. from 0.2 % to 1.2 %, preferably from 0.4 % to 0.8%, raising agents, and/or
d. from 0.01 % to 0.05 %, preferably 0.03 %, table salt.

5. A vegan egg pastry substitute comprising the following components with the stated mass fractions of the vegan egg pastry substitute:
a. from 25 % to 40 % of the vegan dough mass according to any one of claims 1 to 4, wherein the dough mass is baked;
b. from 40 % to 60 % of a filling applied onto the baked vegan dough mass; and
c. from 15 % to 25 % of chocolate applied onto the filling in the form of a chocolate coating.

6. A manufacturing method comprising manufacturing the vegan dough mass according to any one of claims 1 to 4, wherein the manufacturing method comprises the steps of:
a. adding the ingredients of the vegan dough mass to a mixing container, and
b. mixing the ingredients in the mixing container;
c. wherein an aqueous suspension is prepared from the vegetable protein ingredient of the vegan dough mass before the vegetable protein ingredient is added to the mixing container.

7. The manufacturing method according to claim 6,
wherein the aqueous suspension contains the following components with the stated mass fractions of the aqueous suspension:
a. from 60 % to 80 % of water, and
b. from 10 % to 20 % of the vegetable protein ingredient, and
c. preferably from 10 % to 20 % of syrup.

8. The manufacturing method according to claim 6 or 7,
whereby the vegetable fat is added to the mixing container in a liquid state and before the other ingredients are added.

9. The manufacturing method according to any one of claims 6 to 8,
wherein the vegetable protein ingredient is added to the mixing container after the other ingredients have been added.

10. The manufacturing method according to any one of claims 6 to 9,
wherein mixing the ingredients comprises at least two mixing steps, wherein a first mixing step takes place before adding the vegetable protein ingredient, and a second mixing step takes place after adding the vegetable protein ingredient.

11. A production method comprising a production of a vegan egg pastry substitute, the production method comprising the steps of:
a. manufacturing a vegan dough mass using the manufacturing method according to any one of claims 6 to 10,
b. forming dough pieces from the vegan dough mass on a baking support, and
c. baking the dough pieces on the baking support.

12. The production method according to claim 11,
wherein baking takes place
a. during a baking time of at least 5 min, preferably at least 10 min, and/or
b. at a baking temperature of at least 280 °C.

13. The production method according to claim 11 or 12,
wherein the production method comprises whipping the vegan dough mass prior to forming the dough pieces.

14. The production method according to any one of claims 11 to 13,
wherein the production method comprises after baking the dough pieces
a. applying a filling onto the baked dough pieces, and
b. coating the filling with chocolate;
wherein the vegan egg pastry substitute comprises the following mass fractions of the vegan egg pastry substitute:
c. from 40 % to 60 % filling,
d. from 25 % to 40 % baked dough mass and
e. from 15 % to 25 % chocolate.

## Revendications

1. Masse de pâte végétalienne pour la production d'un substitut végétalien de pâtisserie aux œufs sous forme de produit de boulangerie de longue conservation, la masse de pâte contenant les ingrédients suivants dans les proportions indiquées :
a. de 20 % à 40 % de farine,
b. de 15 % à 35 % de sucre,
c. de 15 % à 30 % d'eau,
d. de 5 % à 10 % de graisse végétale et
e. de 1 % à 5 % d'un ingrédient protéique végétal obtenue à partir de pois et/ou de fèves, l'ingrédient protéique végétal ayant une teneur en protéines d'au moins 50 % en poids de la matière sèche de l'ingrédient protéique végétal ,
**caractérisé en ce que**
la masse de pâte contient un humectant représentant entre 4 % et 10 % de la masse de pâte, et
la graisse végétale présente une teneur en graisses solides d'au moins 10 % à 20 °C et/ou une teneur en graisses solides d'au moins 5 % à 30 °C.

2. Masse de pâte végétalienne selon la revendication 1,
l'ingrédient protéique végétal ayant une teneur en protéines d'au moins 75 %, de préférence d'au moins 80 %, en masse sur la matière sèche de l'ingrédient protéique végétal.

3. Masse de pâte végétalienne selon l'une des revendications 1 à 2,
la graisse végétale présentant une teneur en graisses solides d'au moins 15 % à 20 °C et/ou d'au moins 10 % à 30 °C.

4. Masse de pâte végétalienne selon l'une des revendications 1 à 3,
la masse de pâte contenant les ingrédients suivants dans les proportions indiquées par rapport à la masse de pâte
a. de 0,2 % à 0,8 %, de préférence de 0,4 % à 0,6 %, d'émulsifiant,
b. de 1 % à 5 %, de préférence de 2 % à 4 %, d'amidon,
c. de 0,2 % à 1,2 %, de préférence de 0,4 % à 0,8 %, d'agent levant, et/ou
d. de 0,01 % à 0,05 %, de préférence 0,03 %, de sel de table.

5. Substitut végétalien de pâtisserie aux œufs comprenant les composants suivants dans les proportions indiquées par rapport au substitut végétalien de pâtisserie aux œufs :
a. de 25 % à 40 % de masse de pâte végétalienne selon l'une des revendications 1 à 4, la masse de pâte végétalienne étant cuite,
b. de 40 % à 60 % de garniture appliquée sur la masse de pâte cuite et
c. de 15 % à 25 % de chocolat appliqué sur la garniture sous forme d'un enrobage de chocolat.

6. Procédé de fabrication comprenant la fabrication d'une masse de pâte végétalienne selon l'une des revendications 1 à 4, le procédé de fabrication comprenant les étapes suivantes :
a. ajouter les ingrédients de la masse de pâte végétalienne dans un récipient de mélange et
b. mélanger les ingrédients dans le récipient de mélange,
c. une suspension aqueuse étant préparée à partir de l'ingrédient protéique végétal avant l'ajout de celui-ci dans le récipient de mélange.

7. Procédé de fabrication selon la revendication 6,
la suspension aqueuse contenant les composants suivants dans les proportions massiques indiquées par rapport à la suspension aqueuse :
a. de 60 % à 80 % d'eau et
b. de 10 % à 20 % de l'ingrédient protéique végétal et
c. de préférence de 10 % à 20 % de sirop.

8. Procédé de fabrication selon l'une des revendications 6 à 7,
l'ajout de la graisse végétale étant effectué à l'état liquide et avant l'ajout des autres ingrédients.

9. Procédé de fabrication selon l'une des revendications 6 à 8,
l'ajout de l'ingrédient protéique végétal étant effectué après l'ajout des autres ingrédients.

10. Procédé de fabrication selon l'une des revendications 6 à 9,
l'étape de mélanger comprenant au moins deux étapes de mélange, une première étape de mélange ayant lieu avant l'ajout de l'ingrédient protéique végétal et une deuxième étape de mélange ayant lieu après l'ajout de l'ingrédient protéique végétal.

11. Procédé de production comprenant la production d'un substitut végétalien de pâtisserie aux œufs, le procédé de production comprenant les étapes suivantes :
a. fabriquer une masse de pâte végétalienne selon un procédé de fabrication selon l'une des revendications 6 à 10,
b. dresser des pâtons à partir de la masse de pâte sur une surface de cuisson,
c. cuire les pâtons sur la surface de cuisson.

12. Procédé de production selon la revendication 11,
la cuisson ayant lieu
a. pendant une durée de cuisson d'au moins 5 minutes, de préférence d'au moins 10 minutes, et/ou
b. à une température de cuisson d'au moins 280 °C.

13. Procédé de production selon la revendication 11 ou 12,
le procédé de production comprenant un battage de la masse de pâte végétalienne avant le dressage des pâtons.

14. Procédé de production selon l'une des revendications 11 à 13,
le procédé de production comprenant, après la cuisson des pâtons,
a. l'application d'une garniture sur les pâtons cuits et
b. un enrobage de la garniture avec du chocolat ;
le substitut végétalien de pâtisserie aux œufs comprenant les proportions massiques suivantes par rapport au substitut végétalien de pâtisserie aux œufs :
c. de 40 % à 60 % de garniture,
d. de 25 % à 40 % de masse de pâte cuite et
e. de 15 % à 25 % de chocolat.
